# EUROPÄISCHE PATENTSCHRIFT

(11) **EP 3 443 833 B1**
(45) Veröffentlichungstag und Bekanntmachung des Hinweises auf die Patenterteilung: **28.07.2021**
(21) Anmeldenummer: 18168429.1
(22) Anmeldetag: 20.04.2018
(51) Int. Cl.: A01D 41/12, A01D 75/18, A01D 69/08

(54) **SELBSTFAHRENDE ERNTEMASCHINE MIT EINEM ANTRIEBSSTRANG ZUM ANTREIBEN EINES ARBEITSAGGREGATES**
SELF-PROPELLED HARVESTING MACHINE WITH A POWERTRAIN TO DRIVE A WORK UNIT
MOISSONNEUSE AUTOMOTRICE ÉQUIPÉE D'UNE CHAÎNE CINÉMATIQUE DESTINÉE À L'ENTRAÎNEMENT D'UNE UNITÉ DE TRAVAIL

(30) Priorität: 18.08.2017 DE 102017118858
(43) Veröffentlichungstag der Anmeldung: 20.02.2019
(73) Patentinhaber: CLAAS Selbstfahrende Erntemaschinen GmbH, 33428 Harsewinkel (DE)
(72) Erfinder: Pautz, Peter, 33813 Oerlinghausen (DE)
(74) Vertreter: CLAAS Gruppe

(56) Entgegenhaltungen:
- EP-A1- 0 207 685
- EP-B1- 2 839 729
- DE-A1-102009 014 101

## Beschreibung

Die vorliegende Erfindung betrifft eine selbstfahrende Erntemaschine mit einem Antriebsstrang zum Antreiben eines Arbeitsaggregates gemäß dem Oberbegriff des Anspruches 1.

Aus der EP 2 839 729 B1 ist eine selbstfahrende Erntemaschine mit einem Antriebsstrang gemäß dem Oberbegriff des Anspruches 1 bekannt. Der einen Riementrieb umfassende Antriebsstrang dient dem Antrieb eines Radialverteilers eines Mähdreschers. Der Radialverteiler umfasst zwei rotierend angetriebene Läufer. Hierzu wird ein eine Antriebsriemenscheibe und eine Abtriebsriemenscheibe trieblich verbindender Antriebsriemen mittels eines hydraulisch betätigten Kuppelzylinders eingekuppelt. Um ein prozesssicheres Ein- und Auskuppeln zu gewährleisten, sind zusätzlich Bandagen als Riemenführungen notwendig. Die Abtriebsriemenscheibe des Riementriebes ist durch eine Antriebswelle trieblich mit dem Radialverteiler verbunden. Die Antriebswelle mündet in eine erste Getriebestufe des ersten Läufers. Von der ersten Getriebestufe geht eine weitere Welle ab, die in eine zweite Getriebestufe des zweiten Läufers mündet. Zum Schutz des Radialverteilers vor Überlast, insbesondere durch das Blockieren eines Läufers, ist auf einer Getriebeeingangswelle eines Eingangsgetriebes eine trockene Reibkupplung vorgesehen.

Nachteilig an diesem Antriebsstrang ist der für das Kuppeln durch den hydraulisch betätigten Kuppelzylinder erforderliche hohe Teileaufwand. Insbesondere sind zusätzliche Bandagen zur Riemenführung während des Kuppelns notwendig, was insgesamt zu einer hohen Bauraumbeanspruchung führt. Weiterhin ist der Aufwand zur Einstellung der Bandagen erhöht. Darüber hinaus stellt sich ein erhöhter Verschleiß im Riemen ein, da dieser nicht permanent gespannt ist. Ein weiterer Nachteil ergibt sich aus der zumindest teilweise offenen Bauweise des Antriebsstranges, welcher dem Einfluss von Verschmutzung, Beschädigung und Witterung ausgesetzt ist. Bedingt durch den beschränkt vorhandenen Bauraum kann die Reibkupplung am Eingangsgetriebe aufgrund ihrer Baugröße nur begrenzt Energie aufnehmen, bevor es zu einer Beschädigung der Reibkupplung kommt.

Aufgabe der vorliegenden Erfindung ist es, einen Antriebsstrang für ein Arbeitsaggregat der eingangs genannten Art bereitzustellen, wobei sich der Antriebsstrang durch einen einfacheren und bauraumreduzierten Aufbau auszeichnet.

Diese Aufgabe wird durch eine selbstfahrende Erntemaschine mit den Merkmalen des Anspruches 1 gelöst.

Vorteilhafte Weiterbildungen sind Gegenstand der jeweiligen Unteransprüche.

Gemäß dem Anspruch 1 wird eine selbstfahrende Erntemaschine mit einem Antriebsstrang zum Antreiben zumindest eines Arbeitsaggregates vorgeschlagen, wobei der Antriebsstrang einen schaltbaren Riementrieb mit einem eine Antriebsriemenscheibe und eine Abtriebsriemenscheibe trieblich verbindenden Antriebsriemen umfasst, wobei die Abtriebsriemenscheibe des Riementriebes durch eine Antriebswelle trieblich mit dem Arbeitsaggregat verbunden ist. Um den Antriebsstrang einfacher und bauraumsparender auszugestalten, wird gemäß dem Anspruch 1 vorgeschlagen, dass der Antriebsstrang ein Kupplungssystem umfasst, welches die Funktionen einer Riemenkupplung und einer Überlastkupplung in einer Baueinheit vereint, und dass das Ansprechverhalten des Kupplungssystems hydraulisch eingestellt wird ist. Das Vereinen der Funktionen Kuppeln und Überlastschutz in einer Baueinheit führt zu einer Bauraumreduzierung sowie einer Reduzierung der Komplexität des Kupplungssystems. Gegenüber der EP2 839 729 B1 kann auf den Kuppelzylinder, die Reibkupplung sowie auf Bandagen zur Riemenführung verzichtet werden. Gemäß dem vorgeschlagenen Kupplungssystem bleibt die Riemenspannung permanent aufrechterhalten, wodurch sich die Lebensdauer des Riemens verlängert. Die hydraulische Einstellbarkeit des Ansprechverhaltens des Kupplungssystems realisiert die Funktion des Überlastschutzes dadurch, dass ein am Kupplungssystem anliegender hydraulischer Druck, im Weiteren Kupplungsdruck genannt, in seinem Maximum begrenzbar ist, dass bei Überschreitung des dem eingestellten maximalen Kupplungsdruck äquivalentem Drehmoments die Überlastkupplung durchrutscht. Diese Rutschgrenze ist mittels verschiedener maximaler Druckniveaus anpassbar und reduziert so die Komplexität.

Hierzu sind das Kupplungssystem als eine hydraulisch geschaltete, federrückstellbare Einscheibentrockenkupplung mit einem als Abtriebsriemenscheibe ausgebildeten Gehäuseabschnitt ausgebildet. Die das Schalten sowie den Überlastschutz realisierenden Komponenten sind in einem Gehäuse angeordnet, sodass der Einfluss von Verschmutzung und Witterung reduziert wird. Ein weiterer Vorteil ergibt sich aus der Baugröße der Einscheibentrockenkupplung, welche eine hohe Energieaufnahme ermöglicht, sodass die Rutschzeit der Kupplung beziehungsweise der Verschleiß reduziert wird. Die Integration der Abtriebsriemenscheibe in ein die Einscheibentrockenkupplung aufnehmendes Gehäuse vereinfacht den Aufbau, wobei das Gehäuse die Einscheibentrockenkupplung vor Witterungseinflüssen oder Verschmutzung schützt.

Dabei kann die Einscheibentrockenkupplung einen druckbeaufschlagbaren Abschnitt aufweisen. Der druckbeaufschlagbare Abschnitt wird je nach auszuführender Funktion des Kupplungssystems, im Falls des Ein- und Auskuppelns zur Drehmomentübertragung, mit dem einstellbaren Kupplungsdruck beaufschlagt oder entlastet. Bei entsprechender Beaufschlagung des Abschnitts mit dem Kupplungsdruck erfolgt die Drehmomentübertragung reibschlüssig.

Bevorzugt kann der an dem druckbeaufschlagbare Abschnitt anliegende, durch eine Druckquelle bereitgestellte, hydraulische Druck in Abhängigkeit von zumindest einem Betriebsparameter des Arbeitsaggregates ansteuerbar sein. Dabei kann dieser als Kupplungsdruck bezeichnete hydraulische Druck mittels einer Schaltventilanordnung variiert werden. So könnte ein direkt gesteuertes oder vorgesteuertes Druckbegrenzungsventil vorgesehen sein, um den Kupplungsdruck an den zumindest einen Betriebsparameter anpassen zu können. Als Betriebsparameter kommen insbesondere das Antriebsdrehmoment und/oder die Antriebsdrehzahl des Arbeitsaggregates in Frage. Als Druckquelle kommen eine bereits vorhandene Arbeitshydraulik oder eine separate Hydraulikpumpe in Betracht, wobei letztere auch dem Antrieb zumindest eines weiteren Arbeitsaggregates dienen kann. Zur Steuer- oder Regelung des Kupplungsdrucks kann ein einstellbares Druckbegrenzungsventil vorgesehen sein.

Insbesondere kann eine federbelastete Riemenspanneinrichtung zur Vorspannung des Antriebsriemens vorgesehen sein. Im Gegensatz zu dem aus der EP 2 839 729 B1 bekannten Antriebsstrang, der durch den hydraulisch betätigten Kuppelzylinder nicht nur geschaltet sondern zugleich auch der Vorspannung des Antriebsriemens dient, ist das Vorsehen einer im Aufbau einfacheren Riemenspanneinrichtung ausreichend. Zudem ist eine federbelastete Riemenspanneinrichtung kostengünstiger.

Darüber hinaus kann eine mechanische Bremse in den Antriebsstrang integriert sein. Dies hat den Vorteil, dass ein langes Nachlaufen des angetriebenen Arbeitsaggregates vermieden werden kann. Dies ist insbesondere vor dem Hintergrund die Betriebssicherheit des Arbeitsaggregates von Bedeutung.

Bevorzugt kann das Arbeitsaggregat als Radialverteiler ausgebildet sein. Der Radialverteiler dient der Ausbringung von gehäckseltem Stroh über die Arbeitsbreite eines an der Erntemaschine angeordneten Vorsatzgerätes. Darüber hinaus ist der Radialverteiler dazu eingerichtet, in eine sogenannte Schwadablageposition überführt zu werden, um das von der Erntemaschine aufgenommene Stroh in Form von Schwaden abzulegen. Das erfindungsgemäße Kupplungssystem wird beiden Betriebssituationen eines solchen Radialverteilers gerecht, indem es im Verteilerbetrieb neben der Drehmomentübertragung die Überlastschutzfunktion, beispielsweise bei einem Auftreten einer Verstopfung in einem der Läufer, erfüllt und im Schwadablagebetrieb den Antriebsstrang unterbricht.

Dabei kann der Radialverteiler zumindest zwei Läufer aufweisen. Im Allgemeinen weist der Radialverteiler einer selbstfahrenden Erntemaschine zumindest zwei angetriebene Läufer auf, welche der Verteilung von gehäckseltem Stroh über die Arbeitsbreite eines an der Erntemaschine angeordneten Vorsatzgerätes dienen. Bei Arbeitsbreiten von 12 Metern und mehr kann der Radialverteiler auch mit insgesamt vier Läufern ausgeführt sein. Entsprechend kann der erforderliche Kupplungsdruck an die unterschiedlichen Varianten des Radialverteilers angepasst werden, ohne die Einscheibentrockenkupplung neu dimensionieren zu müssen.

Weiterhin wird die eingangs gestellte Aufgabe durch eine selbstfahrende Erntemaschine mit einem als Radialverteiler ausgebildeten Arbeitsaggregat, einer Druckquelle sowie einer Steuerungseinrichtung gelöst, wobei die selbstfahrende Erntemaschine einen Antriebsstrang zum Antreiben des Radialverteilers nach einem der Ansprüche 1 bis 7 umfasst.

Bevorzugt kann die Steuereinrichtung dazu eingerichtet sein, zur Einstellung des Ansprechverhaltens der Überlastkupplung den an dem druckbeaufschlagbaren Abschnitt anliegenden hydraulischen Druck anzusteuern. Auf diese Weise kann die Überlastfunktion mittels des Kupplungsdrucks an die Bauart des Radialverteilers, zwei oder vier Läufer, die Antriebsdrehzahl der Läufer sowie den Verschleiß des Kupplungssystems angepasst werden.

Insbesondere kann die Steuereinrichtung dazu eingerichtet sein, die Ansteuerung des anliegenden hydraulischen Druckes in Abhängigkeit von zumindest einer Ernteguteigenschaft durchzuführen. Das Betriebsverhalten der Läufer des Radialverteilers wird unter anderem durch die Guteigenschaften des zu verteilenden Erntegutes bestimmt, wozu der Durchsatz, die Feuchtigkeit, die Häckselgutlänge und auch die Fruchtart zählen. Diese Ernteguteigenschaften können zur kontinuierlichen Anpassung des hydraulisch eingestellten Überlastmomentes herangezogen werden.

Weiterhin kann die Steuereinrichtung dazu eingerichtet sein, die Ansteuerung des anliegenden hydraulischen Druckes in Abhängigkeit von zumindest einem Betriebsparameter des Radialverteilers durchzuführen. So kann beispielsweise eine bei einer Inbetriebnahme des Radialverteilers auftretende Drehmomentspitze im Antriebsstrang bei der Ansteuerung des Kupplungsdrucks Berücksichtigung finden. Dies kann durch die Hinterlegung zumindest einer entsprechenden Einschaltroutine respektive eines Druckverlaufs in der Steuereinrichtung erreicht werden, welche temporär zur Ansteuerung eines hohen Kupplungsdruck führt. Diese Einschaltroutine wird durch die Steuereinrichtung beim Einschalten des Radialverteilers respektive vor dem Einkuppeln durch das Kupplungssystem ausgewählt. Im Anschluss wird der der Kupplungsdruck anhand zumindest einer in der Steuereinrichtung hinterlegbaren Überlastroutine auf ein niedrigeres Niveau abgesenkt, welches dem gewünschten Überlastdrehmoment, was unter anderem von Ernteguteigenschaften abhängig ist, entspricht. Zudem können die Einschalt- und Überlastroutinen unterschiedliche Ausgestaltungen bzw. Varianten des Radialverteilers bei der Ansteuerung des Kupplungssystems berücksichtigen.

Grundsätzlich ist die Verwendung eines Antriebsstranges mit einem solchen Kupplungssystem auch an anderen Arbeitsaggregaten der selbstfahrenden Erntemaschine denkbar, wozu auf ein von Erntemaschine aufgenommenes und angetriebenes Vorsatzgerät zählt.

Die vorliegende Erfindung wird nachstehend anhand eines in den Zeichnungen dargestellten Ausführungsbeispieles näher erläutert.

Es zeigen:
- Fig. 1: eine schematische Ansicht einer landwirtschaftlichen Erntemaschine;
- Fig. 2: eine schematische Teilansicht eines Antriebstranges eines Arbeitsaggregates der landwirtschaftlichen Erntemaschine;
- Fig. 3: eine Frontansicht eines Kupplungssystems;
- Fig. 4: eine Schnittansicht entlang der Linie A-A gemäß Fig. 3; und

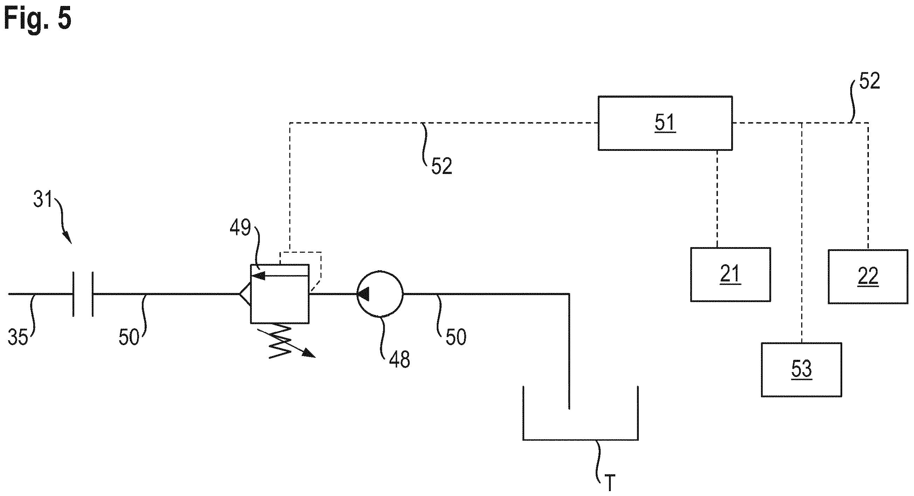

- Fig. 5: ein vereinfachter Schaltplan zur Veranschaulichung der Ansteuerung des Kupplungssystems.

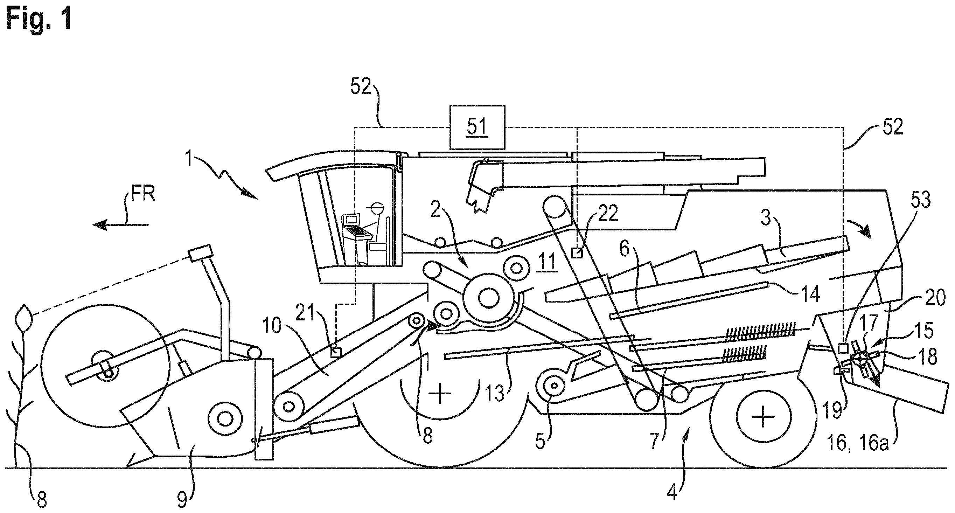

Fig.1 zeigt die Seitenansicht einer als Mähdrescher 1 ausgeführten Erntemaschine mit mehreren Arbeitsaggregaten wie einem an sich bekannten und daher hier nicht näher beschriebenen Dreschwerk 2 und einer diesem nachgeordneten als Hordenschüttler ausgeführten Abscheidevorrichtung 3. Unterhalb der Abscheidevorrichtung 3 befindet sich eine Reinigungseinrichtung 4, bestehend aus einem Reinigungsgebläse 5 und zumindest zwei übereinander angeordneten Sieben, Obersieb 6 und Untersieb 7. Die Erfindung ist aber ausdrücklich nicht auf derartig ausgeführte Mähdreschertypen beschränkt, sondern bezieht sich beispielsweise auch auf Mähdrescher mit Axialabscheiderotoren als Abscheideorgan sowie Mähdrescher mit axial angeordneter Dresch-Trennvorrichtung.

Im vorderen Bereich ist an dem Mähdrescher 1 ein Schneidwerk 9 angeordnet, mit dem abzuerntendes Erntegut 8 geschnitten und aufgenommen wird. Das Schneidwerk 9 führt das Erntegut 8 einem Schrägförderer 10 zu, der frontseitig am Mähdrescher 1 angeordnet ist. Der Schrägförderer 10 übergibt das Erntegut 8 an das im Maschinengehäuse 11 angeordnete Dreschwerk 2 zum Ausdrusch. In dem Schrägförderer 10 ist eine Detektionseinrichtung 21 zur Bestimmung des Erntegutdurchsatzes angeordnet. Hierzu ist in der Regel ein Schichthöhensensor vorgesehen, welcher den aktuellen Durchsatz an aufgenommenem Erntegut 8 bestimmt. Ein überwiegend aus Körnern bestehendes Korn-Spreu-Gemisch wird durch einen oder mehrere Dreschkörbe 12 des Dreschwerks 2 abgeschieden und gelangt über einen Vorbereitungsboden 13 zu der Reinigungseinrichtung 5, um die Körner von den Nichtkornbestandteilen, das heißt von Halmteilen und Spreuteilen zu trennen. Ein im Gutflussweg angeordneter Feuchtesensor 22 erfasst die Feuchtigkeit des Erntegutes.

Im rückwärtigen Bereich ist dem Dreschwerk 2 eine rotierende Wendetrommel zugeordnet, die den aus dem Dreschwerk 2 austretenden, im Wesentlichen aus ausgedroschenen Halmen bestehenden Gutstrom annimmt und der Abscheidevorrichtung 3 zuführt, welche den Gutstrom in den rückwärtigen Bereich des Mähdreschers 1 fördert. Dabei werden die noch im Gutstrom befindlichen Körner sowie Kurzstroh und Spreu abgetrennt, indem sie von der Abscheidevorrichtung 3 auf einen Rücklaufboden 14 gelangen. Der Rücklaufboden 14 transportiert die Körner, das Kurzstroh und die Spreu zum Vorbereitungsboden 13.

Von dem Vorbereitungsboden 13 gelangt das Erntegut in die Reinigungseinrichtung 4, in welcher die Körner von dem Kurzstroh und von der Spreu mittels der oszillierend angetrieben Siebe 6, 7 getrennt werden. Durch die Abscheidevorrichtung 3 gelangt Stroh zum hinteren Ende des Mähdreschers 1, wo es einer Häckselvorrichtung 15 und einer dieser nachgeordneten Verteilvorrichtung 16 als weiteren Arbeitsaggregaten des Mähdreschers 1 zugeführt werden. Die Häckselvorrichtung 15 weist unter anderem eine rotierende Häckseltrommel 17 auf, die in einem Häckslergehäuse 20 gelagert ist. Die Häckseltrommel 17 ist mit beweglichen Messern 18 besetzt, die mit im Häckslergehäuse 20 fest angeordneten Gegenmessern 19 kämmen. Mit diesen Messern 18 und den Gegenmessern 19 wird das Stroh zu Häckselgut zerkleinert und beschleunigt. Ein größtenteils aus Spreu bestehende Siebüberlauf, der nicht durch das Obersieb 6 hindurch fällt, gelangt über das Obersieb 6 in den hinteren Bereich des Mähdreschers 1 und kann ebenfalls der Häckselvorrichtung 15 zugeführt werden. Der aus der Häckselvorrichtung 15 austretende, im Wesentlichen aus gehäckseltem Stroh und Spreu bestehende Gutstrom wird an die Verteilvorrichtung 16 weitergefördert, die den Gutstrom auf dem Feld im Wesentlichen über die Breite des Vorsatzgerätes 9 verteilt. Die Verteilvorrichtung 16 ist als Radialverteiler 16a ausgebildet. Der Radialverteiler 16a umfasst zumindest zwei rotierend angetriebene Läufer, welche den gehäckselten Gutstrom über die Breite des Vorsatzgerätes 9 auf dem Feldboden verteilen.

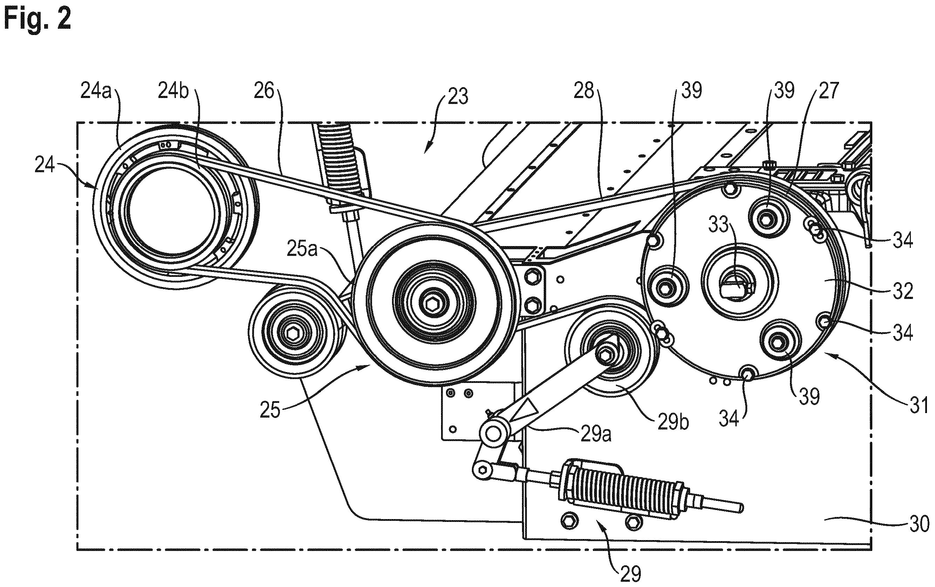

In Fig. 2 ist eine schematische Teilansicht eines Antriebstranges 23 der als Radialverteiler 16a ausgebildeten Verteilvorrichtung 16 des Mähdreschers 1 dargestellt. Der prinzipielle Aufbau und die Funktionsweise eines Radialverteilers 16a sind hinreichend bekannt, so dass auf eine nähere Beschreibung an dieser Stelle verzichtet wird. Ein zwei Riemenscheiben 24a, 24b aufweisender Stufenantrieb 24 treibt durch einen Riemen 26 eine Vorgelegestufe 25 mit einer Antriebsriemenscheibe 25a. Die Antriebsriemenscheibe 25a der Vorgelegestufe 25 ist durch einen Antriebsriemen 28 mit einer Abtriebsriemenscheibe 27 betrieblich verbunden. Eine Spanneinrichtung 29 spannt den Antriebsriemen 28 vor. Die Spanneinrichtung 29 stützt sich hierzu an einem Gehäuse 30 der Verteilvorrichtung 16 ab. Die Spanneinrichtung 29 umfasst eine Andruckrolle 29b, welche durch eine mit einer Federkraft beaufschlagte Hebelanordnung 29a gegen den Antriebsriemen 28 gepresst wird. Die Abtriebsriemenscheibe 27 ist auf der äußeren Mantelfläche eines Gehäuses 32 einer Einscheibentrockenkupplung 31 ausgebildet, die ein Kupplungssystem des Antriebsstranges 23 bildet. Die Einscheibentrockenkupplung 31 ist hydraulisch betätigbar, wofür ein Hydraulikanschluss 33 an dieser vorgesehen ist.

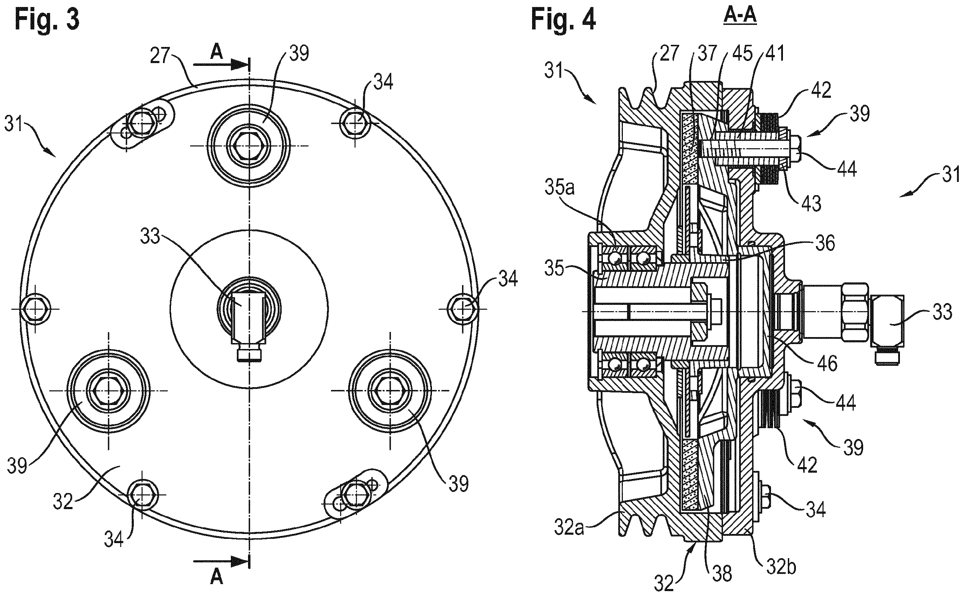

In Fig. 3 ist eine Frontansicht des Kupplungssystems dargestellt. Die Darstellung zeigt das Gehäuse 32 der Einscheibentrockenkupplung 31 sowie die auf dessen Mantelfläche angeordnete beziehungsweise ausgebildete Abtriebsriemenscheibe 27.

Die Darstellung in Figur 4 zeigt eine Schnittansicht der Einscheibentrockenkupplung 31 entlang der Linie A-A gemäß Figur 3. Das Gehäuse 32 umfasst einen ersten Gehäuseabschnitt 32a und einen zweiten Gehäuseabschnitt 32b. Der erste Gehäuseabschnitt 32a und der zweite Gehäuseabschnitt 32b sind durch Schrauben 34 miteinander verbunden. Der erste Gehäuseabschnitt 32a ist auf einer Welle 35 mittels eine Wälzlageranordnung 35a drehbar gelagert. Auf der Welle 35 ist eine Kupplungsscheibe 36 angeordnet, die mittels einer Verzahnung formschlüssig mit dieser verbunden und in axialer Richtung verschieblich ist. Die Kupplungsscheibe 36 weist einen Reibbelag 37 auf. Koaxial zu der Kupplungsscheibe 36 ist eine ebenfalls in axialer Richtung verschiebbare Druckplatte 38 angeordnet. Die Druckplatte 38 ist mit dem zweiten Gehäuseabschnitt 32b durch vorgespannte Schraubverbindungen 39 verbunden. Die jeweilige Schraubverbindung 39 umfasst eine Buchse 40, die sich durch einen Durchgangsbohrung 41 des zweiten Gehäuseabschnitts 32b erstreckt. Auf ihrem über den zweiten Gehäuseabschnitt 32b hinausragenden Abschnitt der Buchse 40 ist eine Druckfeder 42 angeordnet, welche sich an dem zweiten Gehäuseabschnitt 32b und einem am freien Ende der Buchse 40 angeordneten flanschförmigen Abschnitt 43 abstützt. Eine von der Buchse 40 aufgenommene Verbindungsschraube 44 ist in ein Gewindeabschnitt 45 der Druckplatte 38 eingeschraubt. Bevorzugt sind drei Schraubverbindungen 39 unter einem Winkel von 120° in Umfangsrichtung versetzt zueinander angeordnet.

Die Druckplatte 38 weist einen kolbenförmigen Abschnitt 46 auf, welcher über den Hydraulikanschluss 33 mit einem hydraulischen Druck oder Kupplungsdruck beaufschlagbar ist. Die Mantelfläche des kolbenförmigen Abschnitts 46 ist gegenüber dem zweiten Gehäuseabschnitt 32b durch einen Dichtring 47 abgedichtet. Wird der kolbenförmige Abschnitt 46 der Druckplatte 38 mit einem Kupplungsdruck beaufschlagt, so wird die Kupplungsscheibe 36 mit ihrem Reibbelag 37 gegen den ersten Gehäuseabschnitt 32a gepresst. Ist der kolbenförmige Abschnitt 46 drucklos, d.h. steht an dem Hydraulikanschluss 33 kein Kupplungsdruck an, so wird die Druckplatte 38 aufgrund der Rückstellkraft der Druckfedern 42 zum ersten Gehäuseabschnitt 32a beabstandet gehalten, sodass zwischen der Kupplungsscheibe 36 und dem ersten Gehäuseabschnitt 32a kein Kraftschluss auftritt.

Die Einscheibentrockenkupplung 31 vereint die Funktion Kuppeln, bei der die Drehmomentübertragung durch die Druckbeaufschlagung des kolbenförmigen Abschnitts 46 durch Reibschluss hergestellt wird, mit der Funktion Überlastschutz, indem der am kolbenförmigen Abschnitt 46 anliegende maximale hydraulische Druck begrenzt wird, sodass bei Überschreitung des der maximalen hydraulischen Druck äquivalenten Drehmoments die Einscheibentrockenkupplung 31 durchrutscht. Diese Rutschgrenze ist durch verschiedene maximale Druckniveaus anpassbar und reduziert somit die Komplexität bei verschiedenen Antriebsvarianten der Verteilvorrichtung 16. Bezogen auf die als Radialverteiler 16a ausgebildete Verteilvorrichtung 16 heißt dies, dass in Abhängigkeit von der Anzahl der vorgesehenen Läufer, zwei Läufer oder vier Läufer, lediglich das maximale Druckniveau angepasst werden muss, während die Einscheibentrockenkupplung 31 baulich unverändert bleibt. Durch die Ausbildung der Mantelfläche des ersten Gehäuseabschnitts 32a als Abtriebsriemenscheibe 27 wird zudem eine Bauraumreduzierung erreicht. Darüber hinaus wird der Einfluss von Verschmutzung, Beschädigung und Witterung auf das Kupplungssystem reduziert.

In Fig. 4 ist stark vereinfacht ein Schaltplan zur Veranschaulichung der Ansteuerung des Kupplungssystems dargestellt. Eine als Hydraulikpumpe 48 ausgeführte Druckquelle wird aus einem Tank T mit Hydrauliköl gespeist. Durch eine Hydraulikleitung 50 gelangt das Hydrauliköl zu dem Hydraulikanschluss 33 der Einscheibentrockenkupplung 31, um den kolbenförmigen Abschnitt 46 mit Druck zu beaufschlagt. Ein Druckbegrenzungsventil 49 ermöglicht es, den maximalen hydraulischen Druck auf verschiedene Werte einzustellen, mit dem der kolbenförmige Abschnitt 46 beaufschlagt wird. Hierzu ist das Druckbegrenzungsventil 49 durch eine Steuereinrichtung 51 ansteuerbar, mit der das Druckbegrenzungsventil 49 durch eine Signal- und Steuerleitung 52 signaltechnisch verbunden ist. Bei der Druckquelle kann es sich, wie in Fig. 4 dargestellt, um eine separate Hydraulikpumpe 48 handeln. Alternativ kann ein von einer Arbeitshydraulik, insbesondere einem Konstantdrucksystem, des Mähdreschers 1 bereitgestellter hydraulischer Druck verwendet werden, um die Einscheibentrockenkupplung 31 des Kupplungssystems zu betätigen. Die Steuereinrichtung 51 ist durch weitere Signal- und Steuerleitungen 52 mit der Detektionseinrichtung 21 zur Erfassung des Erntegutdurchsatzes sowie dem Feuchtesensor 22 signaltechnisch verbunden.

Die von der Detektionseinrichtung 21 sowie dem Feuchtesensor 22 bereitgestellten erntegutspezifischen Signale werden von der Steuereinrichtung 51 ausgewertet. Die Ansteuerung des Druckbegrenzungsventils 49 zur Einstellung des maximalen hydraulischen Drucks erfolgt in Abhängigkeit von zumindest einem dieser erntegutspezifischen Parameter Durchsatzmenge und oder Feuchtigkeit. Ein weiterer erntegutspezifischer Parameter ist die Häckselgutlänge, welche sich aus der jeweiligen Antriebsdrehzahl der Häckselvorrichtung 15 bestimmen lässt. Hierzu ist ein Drehzahlsensor 53 vorgesehen, dessen Signale mittels der Signal- und Steuerleitung 52 der Steuereinrichtung 51 zur Auswertung zuführbar sind. Darüber hinaus ist die Steuereinrichtung 51 dazu eingerichtet, die Ansteuerung des anliegenden hydraulischen Druckes in Abhängigkeit von zumindest einem Betriebsparameter der Verteilvorrichtung 16 durchzuführen. Zu den Betriebsparametern zählt, wie bereits ausgeführt, die Anzahl der Läufer des Radialverteilers 16a.

Darüber hinaus sind in der Steuereinrichtung 51 unterschiedliche Druckverläufe hinterlegbar, welche beim Einrücken der Einscheibentrockenkupplung 31 bei Inbetriebnahme des Radialverteilers 16a und während des laufenden Betriebes Anwendung finden. So kann beim Einrücken der Einscheibentrockenkupplung 31 durch die Druckbeaufschlagung respektive Einschalten des Radialverteilers 16a ein höherer maximaler hydraulischer Druck durch Ansteuerung des Druckbegrenzungsventils 49 voreingestellt werden, so dass eine auftretende Drehmomentspitze kompensiert wird. Im Anschluss wird für den laufenden Betrieb des Radialverteilers 16a ein maximaler hydraulischer Druck durch die Ansteuerung des Druckbegrenzungsventils 49 eingestellt, welcher dem gewünschten Überlastmoment entspricht. Darüber hinaus ermöglicht die fortlaufende sensorische Erfassung von erntegutspezifischen Parametern eine kontinuierliche Anpassung des eingestellten Überlastdrehmomentes durch die Steuereinrichtung 51 in Abhängigkeit von zumindest einer Ernteguteigenschaft wie Fruchtart, Feuchtigkeit, Durchsatz und/oder Häckselgutlänge.

**Bezugszeichenliste**

| | | | |
|---|---|---|---|
| 1 | Mähdrescher | 27 | Abtriebsriemenscheibe |
| 2 | Dreschwerk | 28 | Antriebsriemen |
| 3 | Abscheidevorrichtung | 29 | Spanneinrichtung |
| 4 | Reinigungseinrichtung | 29a | Hebelanordnung |
| 5 | Reinigungsgebläse | 29b | Spannrolle |
| 6 | Obersieb | 30 | Gehäuse von 16 |
| 7 | Untersieb | 31 | Einscheibentrockenkupplung |
| 8 | Erntegut | 32 | Gehäuse |
| 9 | Vorsatzgerät | 32a | Erster Gehäuseabschnitt |
| 10 | Schrägförderer | 32b | Zweiter Gehäuseabschnitt |
| 11 | Maschinengehäuse | 33 | Hydraulikanschluss |
| 12 | Dreschkorb | 34 | Schrauben |
| 13 | Vorbereitungsboden | 35 | Welle |
| 14 | Rücklaufboden | 35a | Wälzlageranordnung |
| 15 | Häckselvorrichtung | 36 | Kupplungsscheibe |
| 16 | Verteilvorrichtung | 37 | Reibbelag |
| 16a | Radialverteiler | 38 | Druckplatte |
| 17 | Häckseltrommel | 39 | Schraubverbindung |
| 18 | Messer | 40 | Buchse |
| 19 | Gegenmesser | 41 | Durchgangsbohrung |
| 20 | Häckslergehäuse | 42 | Druckfeder |
| 21 | Detektionseinrichtung | 43 | Flanschförmiger Abschnitt |
| 22 | Feuchtesensor | 44 | Verbindungschraube |
| 23 | Antriebsstrang | 45 | Gewindeabschnitt |
| 24 | Stufenantrieb | 46 | Kolbenförmiger Abschnitt |
| 24a | Riemenscheibe | 47 | Dichtring |
| 24b | Riemenscheibe | 48 | Hydraulikpumpe |
| 25 | Vorgelegestufe | 49 | Druckbegrenzungsventil |
| 25a | Antriebsriemenscheibe | 50 | Hydraulikleitung |
| 26 | Riemen | 51 | Steuereinrichtung |
| 52 | Signal- und Steuerleitung | | |
| 53 | Drehzahlsensor | | |
| | | | |
| T | Tank | | |

## Patentansprüche

1. Selbstfahrende Erntemaschine (1) mit einem Antriebsstrang (23), der eingerichtet ist zumindest ein Arbeitsaggregat (16) anzutreiben, wobei der Antriebsstrang (23) einen schaltbaren Riementrieb mit einem eine Antriebsriemenscheibe (25a) und eine Abtriebsriemenscheibe (27) trieblich verbindenden Antriebsriemen (28) umfasst, wobei die Abtriebsriemenscheibe des Riementriebes durch eine Antriebswelle trieblich mit dem Arbeitsaggregat (16) verbunden ist, **dadurch gekennzeichnet, dass** der Antriebsstrang (23) ein Kupplungssystem umfasst, welches die Funktionen einer Riemenkupplung und einer Überlastkupplung in einer Baueinheit vereint, und dass das Ansprechverhalten der Überlastkupplung hydraulisch einstellbar ist, wobei das Kupplungssystem als eine hydraulisch geschaltete, federrückstellbare Einscheibentrockenkupplung (31) mit einem als Abtriebsriemenscheibe (27) ausgebildeten Gehäuseabschnitt (32a) ausgebildet ist.

2. Selbstfahrende Erntemaschine (1) mit einem Antriebsstrang (23) nach Anspruch 1, **dadurch gekennzeichnet, dass** die Einscheibentrockenkupplung (31) einen druckbeaufschlagbaren Abschnitt (46) aufweist.

3. Selbstfahrende Erntemaschine (1) mit einem Antriebsstrang (23) nach Anspruch 2, **dadurch gekennzeichnet, dass** der an dem druckbeaufschlagbaren Abschnitt (46) anliegende, durch eine Druckquelle (48) bereitgestellte hydraulischer Druck in Abhängigkeit von einem Betriebsparameter des Arbeitsaggregates (16) steuerbar ist.

4. Selbstfahrende Erntemaschine (1) mit einem Antriebsstrang (23) nach einem der vorangehenden Ansprüche, **dadurch gekennzeichnet, dass** eine federbelastete Spanneinrichtung (29) zur Vorspannung des Antriebsriemens (28) vorgesehen ist.

5. Selbstfahrende Erntemaschine (1) mit einem Antriebsstrang (23) nach einem der vorangehenden Ansprüche, **dadurch gekennzeichnet, dass** eine mechanische Bremse in den Antriebsstrang (23) integriert ist.

6. Selbstfahrende Erntemaschine (1) mit einem Antriebsstrang (23) nach einem der der vorangehenden Ansprüche, **dadurch gekennzeichnet, dass** das Arbeitsaggregat (16) als Radialverteiler (16a) ausgebildet ist.

7. Selbstfahrende Erntemaschine (1) mit einem Antriebsstrang (23) nach Anspruch 6, **dadurch gekennzeichnet, dass** der Radialverteiler (16a) zumindest zwei Läufer aufweist.

8. Selbstfahrende Erntemaschine (1) nach einem der Ansprüche 1 bis 5 mit einem als Radialverteiler (16a) ausgebildeten Arbeitsaggregat (16), einer Druckquelle (48) sowie einer Steuerungseinrichtung (51), wobei der Antriebsstrang (23) zum Antreiben des Radialverteilers (16a) eingerichtet ist.

9. Selbstfahrende Erntemaschine (1) nach Anspruch 8, **dadurch gekennzeichnet, dass** die Steuereinrichtung (51) dazu eingerichtet ist, zur Einstellung des Ansprechverhaltens der Einscheibentrockenkupplung (31) den an dem druckbeaufschlagbaren Abschnitt (46) anliegenden hydraulischen Druck anzusteuern.

10. Selbstfahrende Erntemaschine (1) nach Anspruch 8 oder 9, **dadurch gekennzeichnet, dass** die Steuereinrichtung (51) dazu eingerichtet ist, die Ansteuerung des anliegenden hydraulischen Druckes in Abhängigkeit von zumindest einer Ernteguteigenschaft durchzuführen.

11. Selbstfahrende Erntemaschine (1) nach einem der Ansprüche 8 bis 10, **dadurch gekennzeichnet, dass** die Steuereinrichtung (51) dazu eingerichtet ist, die Ansteuerung des anliegenden hydraulischen Druckes in Abhängigkeit von zumindest einem Betriebsparameter des Radialverteilers (16a) durchzuführen.

## Claims

1. A self-propelled harvester (1) comprising a drive train (23) adapted to drive at least one working assembly (16), wherein the drive train (23) has a shiftable belt drive comprising a drive belt (28) drivingly connecting a drive belt pulley (25a) and a driven belt pulley (27), wherein the driven belt pulley of the belt drive is drivingly connected to the working assembly (16) by a drive shaft, **characterised in that** the drive train (23) includes a clutch system which combines the functions of a belt clutch and an overload clutch in one unit, and the response characteristic of the overload clutch is hydraulically adjustable, wherein the clutch system is in the form of a hydraulically shifted spring-returnable single-disc dry clutch (31) having a housing portion (32a) in the form of the driven belt pulley (27).

2. A self-propelled harvester (1) comprising a drive train (23) according to claim 1 **characterised in that** the single-disc dry clutch (31) has a pressurisable portion (46).

3. A self-propelled harvester (1) comprising a drive train (23) according to claim 2 **characterised in that** the hydraulic pressure which is applied to the pressurisable portion (46) which is provided by a pressure source is controllable in dependence on an operating parameter of the working assembly (16).

4. A self-propelled harvester (1) comprising a drive train (23) according to one of the preceding claims **characterised in that** there is provided a spring-loaded tensioning device (29) for pretensioning the drive belt (28).

5. A self-propelled harvester (1) comprising a drive train (23) according to one of the preceding claims **characterised in that** a mechanical brake is integrated in the drive train (23).

6. A self-propelled harvester (1) comprising a drive train (23) according to one of the preceding claims **characterised in that** the drive assembly (16) is in the form of a radial spreader (16a).

7. A self-propelled harvester (1) comprising a drive train (23) according to claim 6 **characterised in that** the radial spreader (16a) has at least two rotors.

8. A self-propelled harvester (1) according to one of claims 1 to 5 comprising a working assembly (16) in the form of a radial spreader (16a), a pressure source (48) and an open-loop control device (51), wherein the drive train (23) is adapted to drive the radial spreader (16a).

9. A self-propelled harvester (1) according to claim 8 **characterised in that** the control device (51) is adapted to control the hydraulic pressure applied to the pressurisable portion (46) to adjust the response characteristic of the single-disc dry clutch (31).

10. A self-propelled harvester (1) according to claim 8 or claim 9 **characterised in that** the control device (51) is adapted to perform control of the applied hydraulic pressure in dependence on at least one crop material property.

11. A self-propelled harvester (1) according to one of claims 8 to 10 **characterised in that** the control device (51) is adapted to perform control of the applied hydraulic pressure in dependence on at least one operating parameter of the radial spreader (16a).

## Revendications

1. Machine de récolte automotrice (1) comprenant une chaîne de transmission (23) qui est agencée pour entraîner au moins un organe de travail (16), la chaîne de transmission (23) incluant un entraînement à courroie commutable avec une courroie d'entraînement (28) reliant de manière motrice une poulie de courroie menante (25a) et une poulie de courroie menée (27), la poulie de courroie menée de l'entraînement à courroie étant reliée de manière motrice à l'organe de travail (16) par l'intermédiaire d'un arbre d'entraînement, **caractérisée en ce que** la chaîne de transmission (23) comprend un système d'accouplement qui réunit dans une unité structurelle les fonctions d'un accouplement à courroie et d'un accouplement de surcharge, et **en ce que** la réactivité de l'accouplement de surcharge est réglable hydrauliquement, le système d'accouplement étant conçu sous la forme d'un embrayage monodisque à friction à commande hydraulique et à rappel élastique (31) comprenant une portion de carter (32a) conformée en poulie de courroie menée (27).

2. Machine de récolte automotrice (1) comprenant une chaîne de transmission (23) selon la revendication 1, **caractérisée en ce que** l'embrayage monodisque à friction (31) comporte une portion sollicitable en pression (46).

3. Machine de récolte automotrice (1) comprenant une chaîne de transmission (23) selon la revendication 2, **caractérisée en ce que** la pression hydraulique appliquée à la portion sollicitable en pression (46) et fournie par une source de pression (48) est commandable en fonction d'un paramètre d'exploitation de l'organe de travail (16).

4. Machine de récolte automotrice (1) comprenant une chaîne de transmission (23) selon une des revendications précédentes, **caractérisée en ce qu'**un équipement de serrage à sollicitation élastique (29) est prévu pour précontraindre la courroie d'entraînement (28).

5. Machine de récolte automotrice (1) comprenant une chaîne de transmission (23) selon une des revendications précédentes, **caractérisée en ce qu'**un frein mécanique est intégré à la chaîne de transmission (23) .

6. Machine de récolte automotrice (1) comprenant une chaîne de transmission (23) selon une des revendications précédentes, **caractérisée en ce que** l'organe de travail (16) est conformé en épandeur radial (16a).

7. Machine de récolte automotrice (1) comprenant une chaîne de transmission (23) selon la revendication 6, **caractérisée en ce que** l'épandeur radial (16a) comporte au moins deux disques d'épandeur.

8. Machine de récolte automotrice (1) selon une des revendications 1 à 5, comprenant un organe de travail (16) conformé en épandeur radial (16a), une source de pression (48) ainsi qu'un agencement de commande (51), la chaîne de transmission (23) étant agencée pour entraîner l'épandeur radial (16a).

9. Machine de récolte automotrice (1) selon la revendication 8, **caractérisée en ce que** l'agencement de commande (51) est agencé pour commander la pression hydraulique appliquée à la portion sollicitable en pression (46) afin de régler la réactivité de l'embrayage monodisque à friction (31).

10. Machine de récolte automotrice (1) selon la revendication 8 ou 9, **caractérisée en ce que** l'agencement de commande (51) est agencé pour effectuer la commande de la pression hydraulique appliquée en fonction d'au moins une propriété du produit récolté.

11. Machine de récolte automotrice (1) selon une des revendications 8 à 10, **caractérisée en ce que** l'agencement de commande (51) est agencé pour effectuer la commande de la pression hydraulique appliquée en fonction d'au moins un paramètre d'exploitation de l'épandeur radial (16a).
